# EUROPEAN PATENT SPECIFICATION

(11) **EP 3 316 977 B1**
(45) Date of publication and mention of the grant of the patent: **19.08.2020**
(21) Application number: 16751649.1
(22) Date of filing: 01.07.2016
(51) Int. Cl.: A63B 29/02, F16B 45/02, A62B 35/00

(54) **RETAINING DEVICE TO RETAIN IN POSITION A KARABINER IN A LOOP OF A SLING**
HALTEVORRICHTUNG ZUM HALTEN EINES KARABINERS IN POSITION IN EINER SCHLEIFE EINER SCHLINGE
DISPOSITIF DE RETENUE POUR RETENIR EN POSITION UN MOUSQUETON DANS UNE BOUCLE D'UNE SANGLE

(30) Priority: 01.07.2015 IT UB20151777
(43) Date of publication of application: 09.05.2018
(73) Proprietor: ALUDESIGN S.p.A., 24034 Cisano Bergamasco BG (IT)
(72) Inventor: PAGLIOLI, Carlo, 24034 Cisano Bergamasco BG (IT)
(74) Representative: Marietti, Giuseppe
(86) International application number: PCT/IB2016/053976
(87) International publication number: WO 2017/002090

(56) References cited:
- EP-A1- 0 345 176
- EP-A1- 1 344 951
- EP-A2- 0 970 726
- AU-A4- 2009 100 587
- FR-A1- 2 696 104
- GB-A- 2 441 142
- US-B1- 7 228 600

## Description

### FIELD OF THE INVENTION

The present invention relates to a retaining device to retain in position a karabiner in a loop of a sling, in order to prevent the undesired movement from their relative position suitable for the correct use. The present invention further relates to a climbing tool, for example a tool known in the art as "quickdraw", comprising a retaining device to retain the position according to the present invention.

### BACKGROUND ART

In the field of climbing and in general of sports and working activities at height, tools, comprising a karabiner connected to a sling made of textile fiber, are used in order to belay the person and prevent him/her from falling.

Usually a loop, preferably provided at one end of the sling, is used to connect the sling to the karabiner.

In case of fall, it is important that the karabiner and the sling are positioned with respect to one another so that stress is applied to these elements along the axis of highest resistance in order to allow the proper operation and effective retention.

Usually, such a position of correct use is such that, after inserting the karabiner in the loop of the sling, the latter is substantially arranged at a curved portion of the karabiner preferably in the curved transition portion between a short side and a long side of the karabiner. In fact, the karabiner is usually formed by an elongated ring-shaped body in which there are two sides of lesser length, substantially opposite to one another and two sides of greater length, also opposite to one another. Furthermore, it should be noted that one of the long sides is generally open and is provided with a movable lever for opening/closing a karabiner inlet defined by two ending portions of the long side, at which the latter is cut.

In particular, in the climbing tools known as quickdraws, two karabiners are connected to a sling provided with two loops for the passage therein of the karabiner.

In order to effectively use such climbing tools, in which a karabiner is connected to a loop of the sling, with the karabiner inserted in the loop, during the use the karabiner and the sling are required to keep the relative position of correct use in which the loop is in the curved transition section between a short side and a long side of the karabiner, so as to allow a handy use and the correct grip by the user.

However, during the use the karabiner may slide inside the loop, away from the above described position of correct use. In fact, the sling is made of a material, for example synthetic textile fiber, with low friction over the karabiner, which is generally made of metal material.

To face this drawback, the sling loop is tightened so as to increase the friction over the karabiner, for example by using rings made of elastic material wrapped on the sling at the loop.

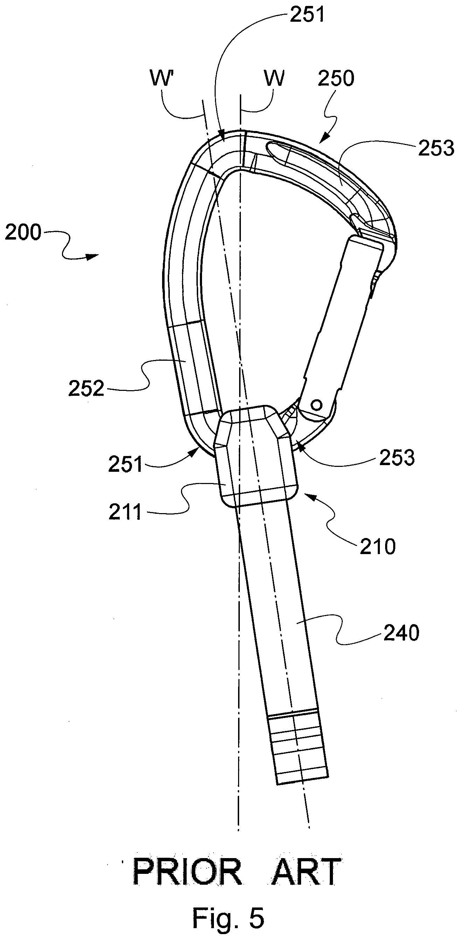

Furthermore, devices provided with a hollow body made of an elastomeric material have been developed with the purpose of limiting the relative movement between the karabiner and the sling loop (see, for example, figure 5 showing a schematic view of part of a quickdraw 200 known in the art, in which a device 210 provided with a hollow body 211 is combined with the sling in order to retain in position the loop of the sling 240 and the karabiner 250).

However, such devices 210 known in the art are not really effective because, on the one hand, their portions directly contacting the karabiner are limited and, on the other hand, being shaped to completely embrace the loop, they inevitably cause the loop to be placed inside the hollow body of such devices, thereby decreasing the contact surface between the device body and the karabiner. Moreover, in some cases the opportunity of inspecting the correct positioning between loop and karabiner is restricted due to the loop placed inside the hollow body of such devices (as shown, for example, in figure 5).

Furthermore, the devices known in the art have the drawback to hardly adapt to the karabiner shape thereby causing a wrong positioning of the sling which, in the event of a possible fall, undergoes stresses misaligned (for example along an axis W') with respect to the axis (W) of highest resistance of the karabiner (as shown for example in figure 5). In particular, the axis W of highest resistance is usually oriented so as to pass between two curved portions 251 of the karabiner substantially opposite one to another, such curved portions defining the transition between a long side 252 and a short side 253.

Document US7228600 relates to a device known in the art, which however is not able to keep the karabiner in position in the loop of a sling. In fact, in such device the karabiner is not inserted in the loop of the sling. The device comprises a body made of plastic, the karabiner being integrated therein by molding. The device further comprises another connecting portion to connect the plastic body with a sling. As a result, load strength and resistance will depend on the characteristics of the plastic body without any cooperation between the karabiner and the sling.

### SUMMARY OF THE INVENTION

In the light of the above, it is an object of the present invention to provide a retaining device to retain in position the karabiner in the loop of a sling, the device being easy to use and allowing the two components to be effectively locked in the desired position.

It is a further object of the invention to provide a retaining device to retain in position the karabiner in the sling loop, the device allowing the components to be quickly and easily assembled.

The present invention achieves these and other objects by means of a retaining device to retain in position a karabiner in a loop of a sling according to claim 1.

Further aspects and features are set forth in the dependent claims. The present invention further concerns a climbing tool according to claim 14 comprising at least one retaining device according to the invention and a method according to claim 15 for retaining in position the karabiner in the loop of a sling by means of at least one retaining device according to the invention.

According to an aspect of the present invention, the retaining device to retain in position a karabiner in a loop of a sling comprises a hollow body having a first opening from which a first substantially straight channel extends for the insertion of part of the sling provided with the loop inside the hollow body. The hollow body further comprises a second opening and a third opening connected to one another through a second channel for the passage of the karabiner. According to the invention, the second channel for the passage of the karabiner extends along a path at least partially curved between the second opening and the third opening wherein the hollow body comprises an abutment wall arranged substantially opposing said first opening, and designed to retain at least part of the loop of the sling inside the hollow body, said abutment wall being in an intermediate position between said second opening and said third opening along the second channel for the passage of the karabiner.

The device according to the invention allows to retain the karabiner in position in a loop of a sling, i.e. allows the relative position between the karabiner and the loop to be kept, the karabiner being inserted (passed) in the loop of the sling.

In fact, the sling portion comprising the loop is inserted into the first channel of the device body (through the first opening of the device body). The karabiner is passed in the second channel of the device body and therefore can be inserted into the sling loop. Advantageously, the sling can be properly positioned with respect to the karabiner and such position can be better kept due to a channel for the passage of the karabiner extending along an at least partially curved path.

In fact, the device body having the passage channel at least partially curved allows to increase the adaptability of the device according to the present invention to the shape of the karabiner, and to provide the correct positioning of the sling as well as to effectively keep this position during use.

It should be noted that the channel for the passage of the karabiner extending along an at least partially curved path, and therefore not extending along a straight axis as in devices known in the art, causes the second opening and the third opening to be arranged in a substantially misaligned position with respect to each other.

By doing so, the hollow body of the device according to the present invention allows to directly embrace a portion of the karabiner preferably at the third opening.

According to an aspect of the present invention it should be noted that at least part of the path, along which the second channel for the passage of the karabiner extends, is not coincident with, or parallel to, the axis of the loop of the sling inserted inside the hollow body.

Furthermore it should be noted that, according to an aspect of the present invention, the second channel extending along an at least partially curved path is configured for embracing a curved portion of the karabiner, preferably a curved portion between a long side and a short side of the karabiner, and can possibly extend at part of the long side of the karabiner, according to some possible embodiments.

Such arrangement has the further advantage of preventing the lateral movement of the karabiner with respect to the sling, thereby providing an excellent resistance to loads (forces) acting substantially along the axis of the sling loop.

According to an aspect of the present invention, the first channel and the second channel intersect at the second opening from which at least part of the loop of the sling protrudes outside of the hollow body.

Advantageously, thanks to the intersection of the first and second channels at the second opening of the hollow body, part of the sling, and in particular part of the loop of the sling inserted from the first opening, will protrude outside of the hollow body at the second opening. Such loop portion protruding outside of the hollow body of the device allows the karabiner to quickly and easily pass therein.

By doing so, the device according to the present invention allows to provide high safety for the user who will be able to easily check the correct assembly of the karabiner inside the loop portion protruding outside of the second opening. Therefore, according to a preferred embodiment, it is not necessary to arrange additional inspection openings (or slots or windows) on the surface of the device body in order to allow checking the correct insertion of the sling. In fact, the portion of the sling loop protruding from the second opening of the device body advantageously allows to check not only the correct assembly of the karabiner, but also the correct insertion of the sling in the device body. However, embodiments are also contemplated in which the retaining device according to the present invention comprises, on the surface of the device body, further inspection openings (or slots or windows) other than the first, second and third openings which allow the inside of the device to be seen from the outside of the body in order to check the correct positioning of the sling therein.

Advantageously, the asymmetric shape of the device with respect to a plane passing through the axis of the first substantially straight channel, and perpendicular with respect to the axis of the loop of the sling inserted in the first channel, allows the hollow body of the device to be adapted to the shape of the karabiner, which is generally asymmetric. In particular, the second opening of the channel for the passage of the karabiner is arranged on a side of the plane with respect to which the hollow body is asymmetrical. On the other side of the plane with respect to which the hollow body is asymmetrical, the second channel for the passage of the karabiner extends substantially away from the second opening.

At least part of the second channel for the passage of the karabiner, and particularly the third opening, is designed to embrace directly a portion of the karabiner. As mentioned, according to an aspect of the invention, at the second opening at least part of the sling protrudes outside of the device body. As a result, the karabiner is inserted in the loop of the sling at the second opening, and therefore the second opening embraces indirectly the karabiner, due to the interposition between these two elements of the sling loop having the karabiner inserted therein.

Moreover, it should be noted that the body of the device according to the present invention is asymmetrically designed in such a way that the second channel of the karabiner extends so as to embrace directly a portion of the karabiner, preferably at a curved portion thereof, between the long side and the short side of the karabiner, with the possibility to extend along at least part of the long side of the karabiner.

The asymmetry of the hollow body gives the further advantage of making easier the assembly of the karabiner in the loop of the sling, once the latter has been inserted in the first channel of the hollow body through the first opening.

In fact, according to the present invention, the insertion of the karabiner into the hollow body will cause the device body to subsequently contact the sling, or vice versa, unlike what happens in devices known in the art in which the karabiner contacts the hollow body of the device, the loop of the sling (placed inside the hollow body of the device) and again the hollow body of the device.

In fact, according to a possible embodiment of the device according to the present invention, if the karabiner is inserted at the second opening, it will pass through the loop of the sling protruding from the same opening, and then will contact the device body at the second channel towards the third opening. In particular, according to a possible embodiment, the third opening embraces directly a portion of the karabiner. Conversely, if the karabiner is inserted through the third opening, it will contact the device body and subsequently the loop of the sling which, according to a possible embodiment, protrudes from the device body at the second opening thereby embracing indirectly the karabiner by the interposition of the loop.

According to an aspect of the present invention, the second opening and the third opening have area and/or shape different from one another.

According to an aspect of the present invention, the third opening has an area smaller than the second opening.

According to an aspect of the present invention, the hollow body of the device is made of elastomeric material.

The present invention further relates to a climbing tool comprising a sling connected to a karabiner. The sling is provided, in correspondence of at least one of its ends, with a loop for the connection to the karabiner, and the karabiner is provided with an elongated ring-shaped body having an inlet defined by two ending portions which can be inserted in the loop of the sling.

The climbing tool comprises a retaining device to retain in position the karabiner in the sling loop according to the present invention. According to an aspect of the invention the climbing tool comprises, in addition to the sling and the karabiner which can be inserted in the sling, a retaining device to retain in position the karabiner in the loop of the sling according to the invention.

The retaining device to retain the position is combined with a sling end inserted in the first channel of the hollow body of the device and connected to the karabiner, the latter being inserted in the hollow body through the second passage channel between the second opening and the third opening.

Obviously, the expression "sling end inserted in the first channel of the hollow body of the device and connected to the karabiner", means that the karabiner is inserted in the loop of the sling. In fact, the end of the sling is connected to the karabiner thanks to the insertion of the karabiner in the sling loop.

The present invention concerns a method for retaining in position the karabiner in the loop of a sling by means of a retaining device to retain the position according to the invention.

According to an aspect of the present invention, the method for retaining in position a karabiner in a sling loop by a retaining device to retain the position herein described and/or claimed, provides the step of inserting an end of the sling comprising the loop in the first channel of the device body and the step of inserting the karabiner in the second channel of the device body. Due to the insertion of the karabiner in the second channel, the karabiner is caused to be inserted in the loop of the sling so that the retaining device keeps the karabiner in position in the sling loop.

### BRIEF DESCRIPTION OF THE FIGURES

Referring to the appended figures, some exemplary and non-limiting embodiments of the present invention will be described, in which:
- figure 1 is a perspective view of a first embodiment of the retaining device to retain the position according to the present invention;
- figures 1a and 1b are top and bottom views, respectively, of the device of figure 1, in which the third opening of the second channel for the passage of the karabiner and the first opening of the first passage channel for inserting the sling are respectively shown;
- figures 1c, 1d are side views of the device of figure 1,
- figure 1e is a front view of the device according to figure 1, wherein part of the sling and part of the karabiner both inserted in the device are further schematically shown;
- figure 2 is a perspective view of a further possible embodiment of the retaining device to retain the position according to the present invention;
- figures 2a and 2b are top and bottom views, respectively, of the device of figure 2, in which the third opening of the second channel for the passage of the karabiner and the first opening of the first passage channel for inserting the sling are respectively shown;
- figures 2c, 2d are side views of the device of figure 2,
- Figure 2e is a front view of the device according to figure 2, wherein part of the sling and part of the karabiner both inserted in the device are further schematically shown;
- figures 3 and 3a are a perspective view and a plan view, respectively, of a climbing tool and in particular a quickdraw, comprising a retaining device to retain the position according to figure 1;
- figures 4 and 4a are a perspective view and a plan view, respectively, of a climbing tool and in particular a quickdraw, comprising a retaining device to retain the position according to figure 2;
- figure 5 is a partial and schematic view of a climbing tool comprising a retaining device known in the art.

### DETAILED DESCRIPTION OF SOME EMBODIMENTS OF THE PRESENT INVENTION

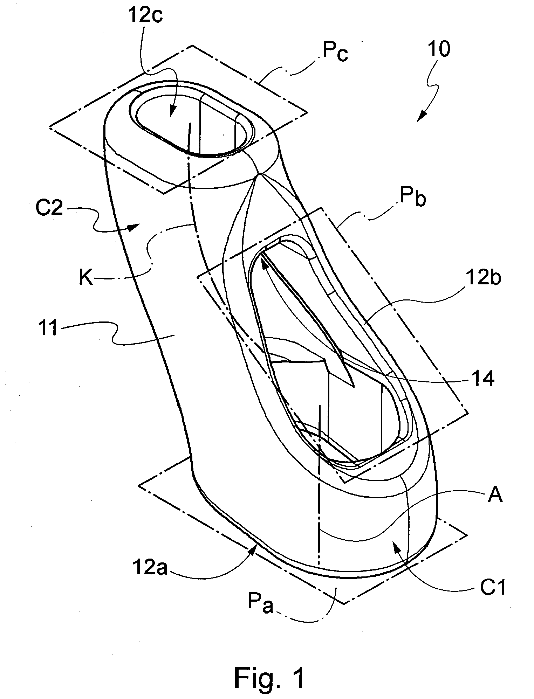

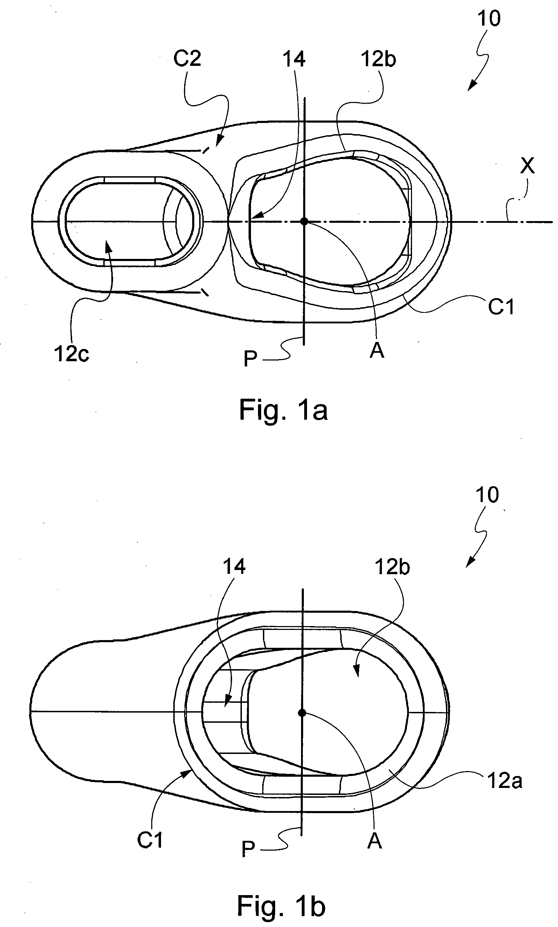

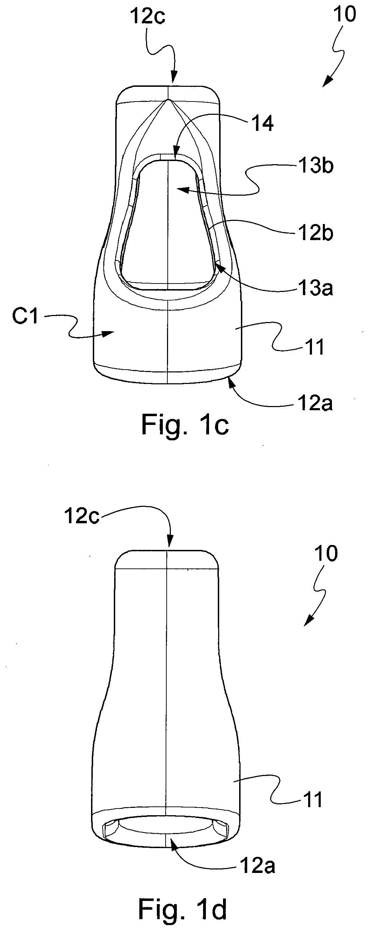

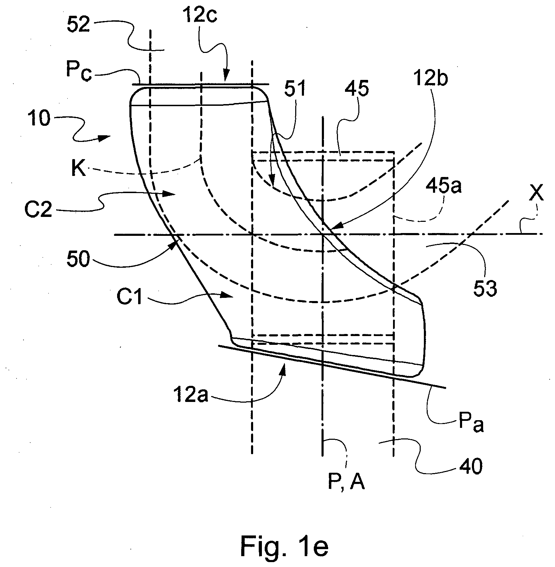

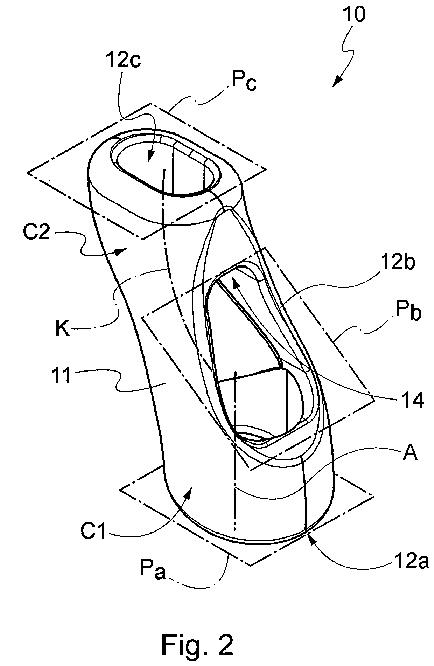

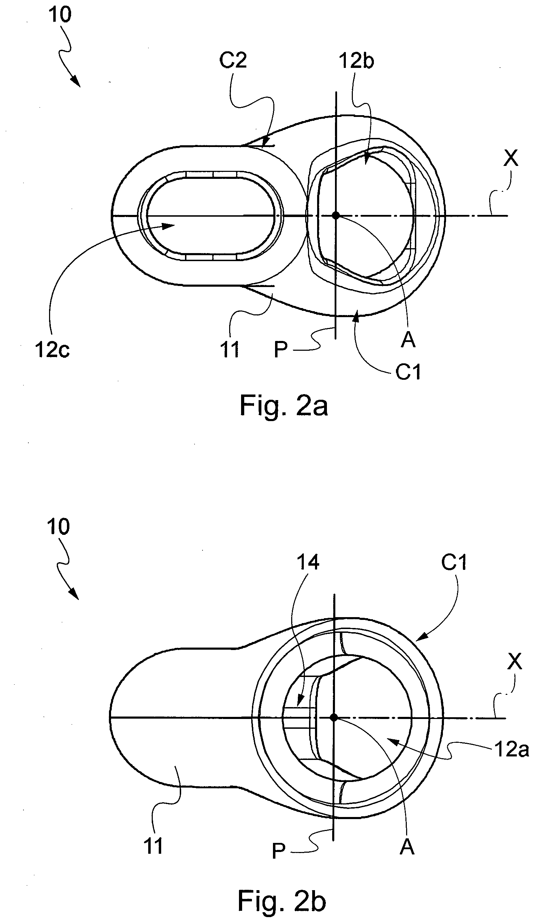

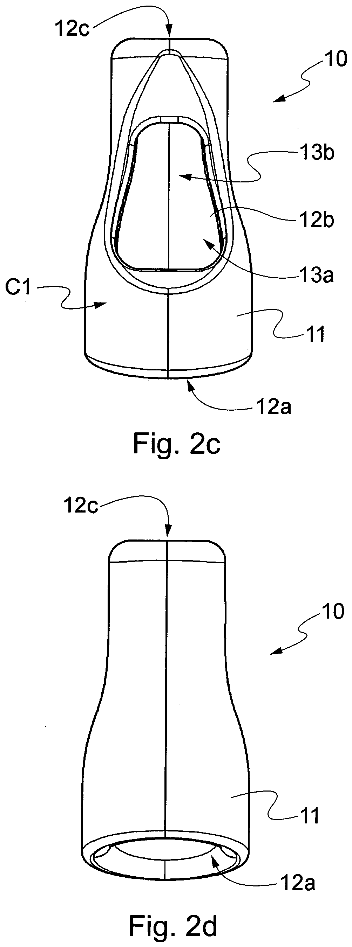

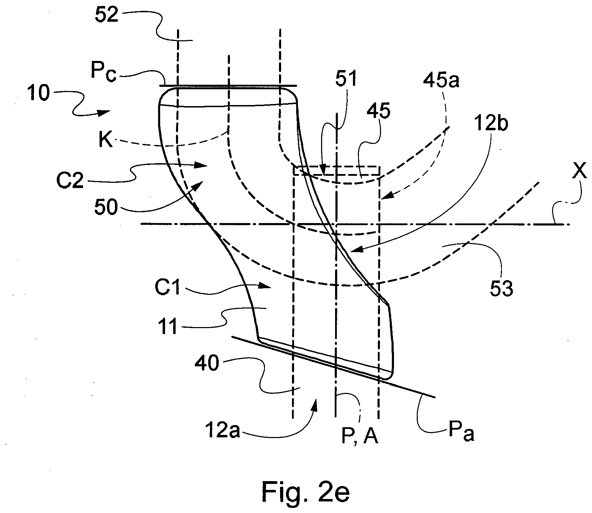

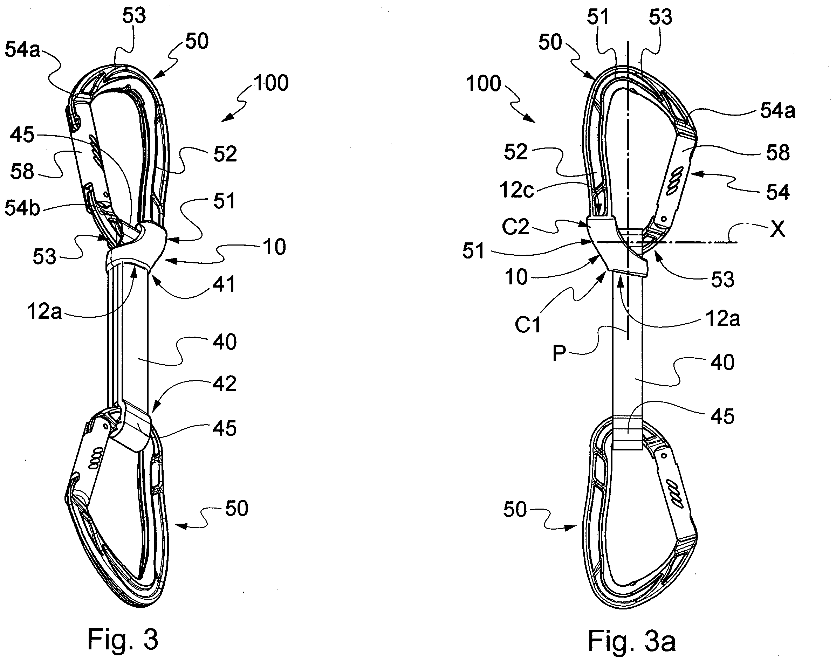

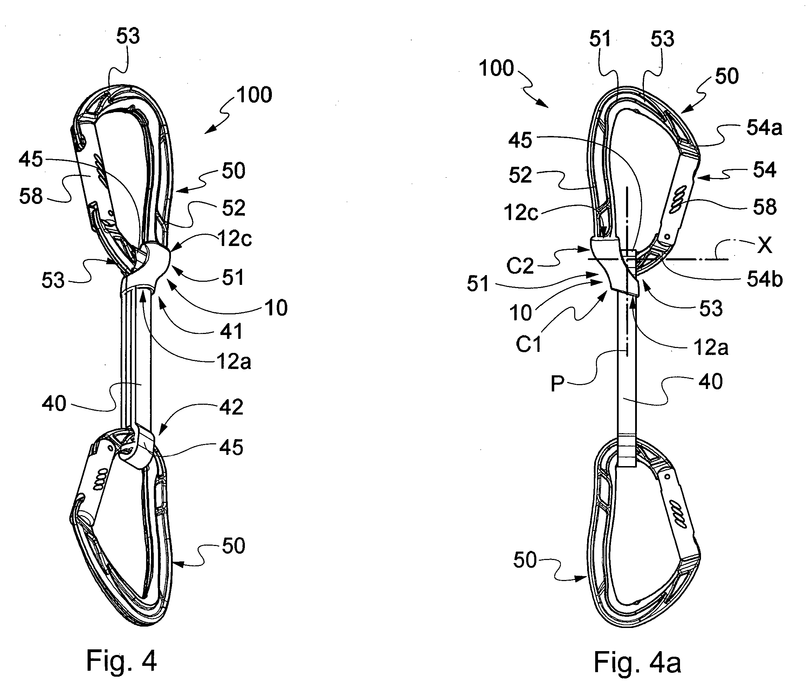

Two possible embodiments of the retaining device to retain in position a karabiner in a sling loop according to the present invention will be now described, referring to the attached figures. It should be noted that figures 1 - 1e and 3, 3a relate to a first embodiment, whereas figures 2- 2e, 4 and 4a relate to the second embodiment having different size with respect to the first one, as will be seen. In fact, in the second embodiment the device is designed to receive a sling smaller than the sling that can be used in the first embodiment of the device.

It should be noted that, hereafter, in general reference will be made to a karabiner 50 kept in position in a loop 45 of a sling 40 by means of the retaining device 10 to retain the position according to the present invention. Obviously, the description can apply to specific uses of the device 10 according to the invention in climbing tools 100 allowing the use of the device 10.

In detail, the device 10 according to the present invention can be used in climbing tools in which a sling 40 is connectable to a karabiner 50 and the sling has, in correspondence of at least one of its ends 41, 42, a loop 45 for the connection to the karabiner 50. Usually, the sling is made of a tensile-strength resistant material such as, for example, a preferably synthetic textile fiber. The sling 40 is suitably folded, for example at either one or both ends 41, 42, and suitably constrained, for example by sewing, in order to form one or two loops 45, preferably at either one or both its ends 41, 42.

For example, in the climbing tool 100 known as quickdraw (see for example figures 3, 3a, 4, 4a), both ends 41, 42 of the sling 40 are provided with a loop 45 allowing them to be connected to a respective karabiner 50.

The sling 40, when not folded or bent, has substantially flat shape and longitudinal axis. Such longitudinal axis is substantially perpendicular to the axis X of the loop 45.

The karabiner 50, which is inserted in the loop 45 of the sling 40, is provided with a ring-shaped body having a substantially elongated shape and provided with an inlet 54 defined by two ending portions 54a and 54b.

In more detail, the body of the karabiner comprises two sides 53 of lesser length, or short sides, arranged substantially opposite to each other and connected by a side 52 having greater length with respect to previous ones, i.e. a long side 52. Between the long and short sides 52, 53 there are curved portions 51 making the transition between the two sides 52, 53.

The inlet 54 is arranged on a second long side 52 and the ending portions 54a and 54b extend from the two short sides 53.

As a result, one of the long sides 52 is open and can comprise a movable lever 58 preferably hinged at an end of the long side which is cut in order to allow the opening/closing reversible movement of the inlet. In more detail a movable lever 58, adapted to selectively close the inlet 54, is hinged at one of the ending portions 54b and cooperates with the other ending portion 54a for closing/opening the inlet. As known in the art, the body of the karabiner is preferably made of metal material.

The karabiner 50, once inserted in the sling loop 45 by slipping therein either one of the ending portions 54a, 54b or an end of the movable lever 58, is then slid inside the loop 45 until the latter is arranged substantially at the curved transition portion 51 between the short side 53 and the long side 52. Preferably, the short side 53 is adjacent to the ending portion 54b on which the opening/closing lever 58 is hinged.

If the sling is provided with a second loop 45 for the connection to a second karabiner 50, as for example in the quickdraw 100, the description made heretofore and what will follow referring to the retaining device to retain the position, can apply to the connection of the sling to the second karabiner through the further loop (even if in figures 3, 3a and 4, 4a the retaining device is not shown combined also with a second karabiner).

The retaining device 10 to retain the position according to the present invention, allows the karabiner 50 to be locked and then retained in the sling loop (the karabiner being therefore inserted in the loop of the sling) so as to keep such elements in the optimal position for properly transmitting forces and loads during use.

In particular, the device 10 retains the karabiner 50 so that the loop 45 of the sling 40 is arranged substantially at the short side 53 of the karabiner, preferably at the curved portion 51 between the short side 53 and the long side 52. In fact, the karabiner 50 is usually designed so that the operative position to retain the loads applied thereto is arranged at the curved transition portion 51 between the long side 52 and the short side 53.

In other words, the device according to the present invention allows to prevent the karabiner 50 from undesirably moving with respect to the loop 45. As mentioned, the relative movement of the karabiner 50 with respect to the loop 45 is prevented with the karabiner inserted in the loop of the sling.

A possible embodiment of the device 10 according to the present invention will be described hereinafter referring to figures 1, 1a - 1e, 3 and 3a. It should be noted that the present description also applies to the embodiment depicted in figures 2, 2a - 2e, 4 and 4a, differing from the first embodiment in that the body 11 of the device 10 has smaller sizes, and in particular the first channel for inserting the sling and the first opening of such channel have smaller sizes in order to receive a sling 45 of smaller width with respect to the one used in the first embodiment. Since the two depicted embodiments are very similar to each other, the same numerical references have been used in the accompanying figures for both the depicted embodiments.

The retaining device 10 to retain in position a karabiner 50 in a loop 45 of a sling 40 according to the invention, comprises a hollow body 11 having a first opening 12a from which a first substantially straight channel C1 extends. In other words, the first channel C1 extends along a straight path defined by an axis A.

The first opening 12a allows for the insertion of part of the sling 40 comprising the loop 45 inside the hollow body 11.

It should be noted that, hereinafter, "channel" means a part of the body 11 of the device 10 having substantially tubular shape and a section that can be either constant or variable along its extent. The shape of the channel section is not necessarily circular but different shapes can be used, such as flat shapes (for example oval or rectangular, possibly having sides connected to each other, etc.).

Furthermore, it should be noted that the section can change its shape along the extent of the channel.

The first channel C1 is intended for the insertion of the sling 40 and in particular of the sling end comprising the loop 45. For this reason, the shape and sizes of the first channel C1 are such as to allow inserting the sling.

In particular, according to a possible embodiment, the first channel C1 is straight and its central axis A is coincident with, or parallel to, the insertion direction of the sling 40 through the first opening 12a.

The shape of the first opening 12a is such as to allow the passage of the sling and, according to a possible embodiment shown for example in figures 1 - 1e, is flat. According to a further possible embodiment, shown for example in figures 2 - 2e, the first opening 12a, as well as part of the channel C1, has substantially circular shape. As said, the shape can be suitably selected in order to better allow the passage (insertion) of the sling therein.

The hollow body 11 of the device 10 further comprises a second opening 12b and a third opening 12c connected to one another through a second channel C2 for the passage of the karabiner 50. As it will be seen better in the following, according to an aspect of the present invention, the second channel C2 for the passage of the karabiner extends along a path K (see for example figures 1e and 2e) at least partly curved between the second opening 12b and the third opening 12c.

The sling portion comprising the loop is inserted into the first channel C1 of the device body (through the first opening of the device body). The karabiner is passed through the second channel C2 of the device body and therefore can be inserted into the loop of the sling.

As a skilled person in the field will immediately appreciate, the retention of the karabiner in position in the loop of the sling, i.e. with the karabiner inserted in the loop of the sling, means that the three openings 12a, 12b and 12c (and then the first and the second channels C1, C2) are in communication with each other.

In fact, the three openings 12a, 12b and 12c are connected to each other so that the karabiner 50 (passing through the second channel C2) is inserted in the loop 45 of the sling (passing through the first channel C1), so that the device according to the invention retains in position the karabiner in the loop of the sling.

In other words, the first channel C1 and the second channel C2 are connected to each other. In fact, the karabiner (passing through the second channel) is inserted in the loop of the sling (passing through the first channel) so that the device according to the invention retains in position the karabiner in a sling loop.

Moreover, according to an aspect of the invention, the first channel C1 and the second channel C2 intersect at the second opening 12b. In particular, according to an aspect of the invention, the second opening 12b is shaped so that through the latter at least part of the loop 45 of the sling 40 protrudes outside of the hollow body 11.

By doing so an end of the loop 45, and in particular a passage segment 45a (inlet) for the passage of the loop, is outside of the device body and therefore directly accessible in order to allows the karabiner 50 to be inserted therein.

By doing so, it is possible to quickly and easily check the correct insertion of the sling in the device body as well as the correct passage of the karabiner inside the loop.

Preferably, according to such arrangement of the second opening 12b, it is not necessary to arrange additional inspection openings (or slots or windows) on the surface of the device body in order to allow the correct insertion of the sling to be checked. However, as above mentioned, (even if not shown in the appended figures) embodiments are also contemplated in which the retaining device according to the present invention comprises, on the surface of the device body, further inspection openings (or slots or windows) other than the first, second and third openings which allow the inside of the device to be seen from the outside of the body in order to check the correct positioning of the sling therein. According to an aspect of the invention an additional inspection opening can be provided, for example if the loop of the sling is not allowed to protrude outside of the device body through the second opening 12b due to the design thereof, or if only a limited part of the loop of the sling protrudes outside of the hollow body through the second opening 12b. It should be noted that the hollow body 11 comprises an abutment wall 14 arranged substantially opposing the first opening 12a and designed to retain at least part of the sling loop 45 inside the hollow body 11. Moreover, the abutment wall 14 is arranged at an intermediate position between the second opening 12b and the third opening 12c along the second channel C2 for the passage of the karabiner. In other words, the abutment wall 14 is arranged along the extent of the channel C2 for the passage of the karabiner between the second opening 12b and the third opening 12c. By doing so, the loop 45 inserted in the first channel C1 is in the second channel C2, thereby allowing the karabiner (which is passed through the second channel C2) to be inserted in the loop 45.

In more detail, the hollow body 11 is designed so that at a position substantially opposing the first opening 12a there is an abutment wall 14 defining a limit for the sliding of the sling, after the latter has been inserted into the hollow body through the first opening 12a. In detail, the abutment wall 14 is arranged so as to intercept the path of the sling, and in particular of the loop of the sling inside the first channel C1 after the insertion through the first opening 12a. By doing so, part of the sling loop is retained inside the hollow body 11 of the device.

According to a possible embodiment, the sling loop 45 is at least partially retained inside the device body, substantially at the abutment wall 14, while part of the sling, and in particular of the loop 45, protrudes outside of the device body through the second opening 12b.

Along the second channel C2 for the passage of the karabiner, on one side, the loop will protrude outside the device body at the second opening 12b, while on the other side with respect to the abutment wall 14, the second channel C2 ending at the third opening 12c defines a portion adapted to embrace directly part of the karabiner 50.

According to an aspect of the present invention, the first opening 12a and the second opening 12b of the hollow body 11 are arranged so that at least part of the projection of the first opening 12a along the straight axis A of the first channel C1 passes through the second opening 12b. By doing so at least part of the sling 40, and in particular of the loop 45, inserted in the hollow body 11 from the first opening 12a can protrude outside through the second opening 12b. According to a possible embodiment, shown for example in figures, the axis A of the first channel C1 for inserting the sling 40, passes through the second opening 12b. In other words, the axis A of the first channel, which substantially coincides with the longitudinal axis of the sling 40 since the sling is preferably inserted in centered position with respect to the first channel C1 and in particular with respect to the first opening 12a, passes through the second opening 12b.

According to an aspect of the present invention, at least half the length of the sling 45 measured along the axis X of the loop, will protrude outside of the device body 11, thereby making available a large part of the sling to check the correct position thereof as well as the insertion of the karabiner inside the loop.

According to a possible embodiment, the second opening 12b extends from the abutment wall 14 towards the first opening 12a. In other words, the second opening has elongated shape and extends towards the first opening 12a.

According to a possible embodiment, the second opening 12b has a portion 13a of greater width and a portion 13b of smaller width, see for example the side views of figures 1c and 2c.

The portion 13a of greater width of the second opening 12b is preferably arranged in the part of the opening distal from the abutment wall 14 and proximal to the first opening 12a. The portion of smaller width of the second opening 12b is rather preferably arranged in the part of the opening proximal to the abutment wall 14 and distal from the first opening 12a.

According to an aspect of the present invention, the second opening 12b is tilted with respect to the axis A of the first channel C1. In other words, the second opening 12b lies on the plane Pb tilted with respect to the axis A of the first Channel C1, i.e. with respect to the direction along which the sling is inserted inside the hollow body through the first opening 12a.

In other words, the first opening 12a and the second opening 12b substantially lie on two incident planes Pa, Pb.

In other words, the axes perpendicular to the planes Pb and Pc, on which the first and the second openings 12b, 12c substantially lie, are incident to one another.

It should be noted that, hereinafter, the expression "substantially lies on a plane", or "plane on which the opening substantially lies" is used because, as shown for example in figures, the openings can lie not completely on a plane since they have tapered or adapted shape in order to allow the adaptation and passage of the components, such as the sling and/or the karabiner.

Anyway, as for example visible in the figures, it is always possible to identify a plane on which at least two different parts of the opening lie, even though other portions of the perimeter thereof are located below the identified plane.

See for example the side figures of figures 1e and 2e in which the plane Pb of the second opening 12b substantially passes between the portions having greater and lesser sizes 13a and 13b and some parts of the perimeter of the opening lie below this plane Pb. According to an aspect of the present invention, it should be noted that the second opening 12b and the third opening 12c have different areas and/or shapes.

According to an aspect of the present invention, the third opening 12c is adapted to embrace directly a portion of the karabiner, and preferably the long side 52 of the karabiner, whereas the second opening 12b is adapted to embrace indirectly a portion 53 of the karabiner (preferably at the short side 53), by interposing the sling loop 45, for example in correspondence of at least part of the loop 45 protruding from the second opening 12b.

In more detail the shape and/or sizes, and in particular the area, of second opening 12b are such as to embrace the loop 45 of the sling 40 and the karabiner 50 inserted in the loop 45 of the sling 40. In fact, the karabiner does not directly contact the body 11 of the device 10 at the second opening 12b. The area and/or shape of the third opening 12c are such as to embrace only the karabiner 50, preferably at a long side 52 thereof or at the curved portion 51 between the long side 52 and the short side 53.

In general it should be noted that, according to an aspect of the present invention, the third opening 12c is smaller than the second opening 12b.

According to an aspect of the present invention, the third opening 12c and the first opening 12a lie on substantially parallel planes Pc, Pa. In more detail, the axes perpendicular to the planes on which the first opening 12a and the third opening 12c substantially lie, are substantially parallel to one another. It should be noted that the expression substantially parallel comprises possible embodiments, such as for example the one depicted in figures, wherein the planes Pa and Pb are slightly tilted with respect to one another. However it should be noted that, according to an aspect of the present invention, the first opening 12a for the insertion of the sling and the third opening 12c of the channel for the passage of the karabiner do not lie on mutually perpendicular planes, as rather occurs in devices known in the art (see for example figure 5).

Turning back to the second channel C2 designed to allow the karabiner 50 to pass inside the hollow body, and connecting the second opening 12b and the third opening 12c, according to an aspect of the invention, it extends along an at least partially curved path K between the second opening 12b and the third opening 12c. It should be noted that the second channel C2 for the passage of the karabiner, for example, is schematically shown by a dotted line in figures 1, 1e and 2, 2e.

In other words, as visible for example in figures 1e and 2e, the axis of the second channel C2 is not straight and therefore the second and the third openings 12b and 12c are misaligned with respect to each other.

Such design of the second channel C2 allows to effectively prevent the karabiner 50 from laterally moving with respect to the sling 40. In fact, due to the passage channel C2 extending along a curved line K, at least part of the body 11 of the device 10 can be arranged to contact directly a curved portion 51 of the karabiner.

In fact, the channel C2 for the passage of the karabiner 50 between the second opening 12b and the third opening 12c is at least partially curved so that at least part of the device body, and in particular at least part of the second channel C2, is adapted to embrace a curved portion 51 of the karabiner 50, preferably a curved portion between a long side 52 and a short side 53 of the karabiner.

As a result, the device according to the present invention advantageously allows to better retain in position the karabiner in the loop of the device, thus preventing them from moving with respect to each other.

In fact, the direct contact of part of the device with a curved portion 51 of the karabiner allows to more effectively and safely prevent the displacement of the karabiner in the loop especially when, during use, lateral loads, i.e. directed substantially along the axis X of the loop 45, are applied to the karabiner and the sling, thereby tending to slide the karabiner inside the loop 45.

It should further be noted that, according to an aspect of the present invention, the second channel C2 is shaped so as to at least partially extend at a long side 52 of the karabiner. In more detail, according to an aspect of the present invention, the second channel C2 ends in the third opening 12c which is arranged at a long side 52 of the karabiner. Advantageously, the karabiner is better retained in position on the sling, thanks to the direct contact of the device body with the long side 52 of the karabiner, in correspondence of at least part of the second channel C2 and in particular the third opening 12c, the contact allowing to effectively counter laterally directed loads (substantially along the axis X of the loop), which would cause the karabiner to slide inside the loop itself. According to an aspect of the present invention, the hollow body 11 is asymmetrical with respect to a plane P passing through the axis A of the first channel C1 and perpendicular with respect to the axis X of the loop 45 of the sling 40 inserted in the first channel C1. In fact, the third opening 12c, adapted to directly embrace a portion of the karabiner 50 is arranged on one side of that plane P (for example, the left side in the figures 1e and 2e), whereas the second opening 12b is arranged on the other side of the plane P (the right side in the side views of figure 1e and 2e). As mentioned, according to a possible embodiment, the second opening 12b is designed to cause part of the loop 45 of the sling 40 to come out of the hollow body 11 of the device. Advantageously, since the second and the third opening 12b, 12c of the second channel C2 for the passage of the karabiner are misaligned with each other, the hollow body of the device will better adapt to the asymmetry of the karabiner body and will further ensure maximum reliability and certainty when installing the karabiner inside the sling.

In fact, the third opening 12c allows to embrace directly a portion of the karabiner, so that the karabiner is more effectively retained in position in the loop. Furthermore, the portion of the loop protruding outside of the hollow body 11 allows to quickly and easily check the correct insertion of the sling in the hollow body 11 of the device, as well as of the karabiner inside the loop.

As previously discussed, the device 10 according to the present invention can be used in climbing tools 100, as visible for example in figures 3, 3a and 4 showing a possible embodiment of a climbing tool 100 known as quickdraw, comprising at least one retaining device 10 to retain the position according to the present invention.

It should be noted that characteristics and/or aspects described and/or claimed in connection with the retaining device 10 to retain to position can apply as well to the climbing tool 100, and vice versa.

According to an aspect of the present invention, the climbing tool 100 comprises a sling 40 connectable to at least one karabiner 50. The sling is provided in correspondence of at least one of its ends 41, 42 with a loop 45 for the connection to the karabiner 50. The karabiner 50 is provided with a ring-shaped body 50a having substantially elongated shape, and with an inlet 54 defined by two ending portions 54a and 54b which can be inserted in the loop 45 of the sling 40.

Generally, the two ending portions 54a, 54b are obtained on a long side 52 of the karabiner which is cut to form the inlet 54.

A movable lever 58, adapted to selectively close the inlet 54, is preferably hinged at one of the ending portions 54b and cooperates with the other ending portion 54a for closing/opening the inlet.

The climbing tool 100 comprises at least one retaining device 10 to retain in position the karabiner 50 in the loop 45 of the sling 40, which is combined with an end 41, 42 of the sling inserted in the first channel C1 of the hollow body 11 of the device and connected to the karabiner 50 inserted in the hollow body 11 through the second passage channel C2 between the second opening 12b and the third opening 12c.

The karabiner 50 is inserted in the sling loop 45 by slipping therein one of the ending portions 54a, 54b or an end of the movable lever 58, if the latter is present.

It should be noted that the ending portion 54a of the karabiner is inserted inside the hollow body 11 by passing through the second opening 12b. In this case, as previously discussed, the ending portion 54a is inserted in the portion of the loop 45 through the opening 12b. On the contrary, whether the karabiner 50 is inserted into the hollow body 11 of the device 10 from the ending portion 54b or from the free end of the lever 58, the ending portion 54b, or the free end of the lever 58, is inserted through the third opening 12c. Advantageously, as can be seen by comparing Figures 3, 3a, 4, 4a with Figure 5 which shows a known climbing tool provided with a retaining device which is also known, the retaining device 10 according to the present invention allows to effectively arrange and retain the sling loop in the position of correct use at a curved portion 51 of the karabiner, preferably in the curved transition section between a short side 53 and a long side 52 of the karabiner.

By doing so, the sling 40 is aligned with the highest resistance axis of the karabiner, that is usually oriented so as to pass between two substantially opposite curved portions 51 of the karabiner.

As for the method of retaining in position a karabiner 50 in the loop 45 of a sling by means of a device 10 according to the invention, i.e. the method of assembling a sling 40, a karabiner 50 and a device 10, according the invention, for retaining in position the karabiner in the sling loop 45, it comprises a first step of inserting the end 41, 42 of the sling 40 comprising the loop 45 in the first channel C1 of the body 11 of the device 10. In particular, the sling is inserted into the first opening 12a of the hollow body 11 of the device 10.

According to a possible embodiment, after the insertion at least part of the loop 45 of the sling 40 protrudes outside of the device body through the second opening 12b.

Then, the method comprises the step of inserting the karabiner 50 into the second channel C2 of the device body.

Such step provides for the insertion of the karabiner 50 into the sling loop 45 by slipping therein either one of the ending portions 54a, 54b or an end of the movable lever 58, if the latter is present.

After inserting the karabiner, the karabiner is caused to slide with respect to the loop 45 of the sling and the device until the sling loop 45 is in the position of correct use at the short side 53 of the karabiner, preferably at the curved portion 51 between the short side 53 and the long side 52 (such position can be seen for example in figures 1e, 2e, 3, 3a, 4, 4a).

It should be noted that the karabiner can be inserted inside the hollow body 11 of the device 10 starting the insertion from either the second opening 12b or the third opening 12c. If the insertion takes place from the second opening 12b, the karabiner 50 is inserted therethrough into the second channel C2, passing through the part of the loop 45 protruding from the device body at the second opening 12b (if such protrusion of the sling from the opening 12b is provided).

For more details about the insertion of the ending portion 54a (i.e. the end not having the movable lever 58 hinged thereto) in the second opening 12b, or the insertion of the ending portion 54b or the free end of the lever 58 in the third opening 12c, reference can be made to the above description.

Advantageously, in the method according to the invention, the insertion of the karabiner in the hollow body 11 will result in the subsequent contact of the karabiner with the body of the device and the sling, or vice versa.

In fact, if the karabiner is inserted at the second opening 12b, it will pass into the sling loop 45 and subsequently come into contact with the device body at the second channel C2 toward the third opening 12c. Conversely, if the karabiner is inserted through the third opening 12c, the karabiner will contact the body 11 of the device 10 (at the third opening 12c) and subsequently the loop 45 of the sling 40.

It should be noted that what is described and/or claimed with reference to the retaining device to retain the position and/or with reference to the climbing tool, can be applied to the method according to the invention, and vice versa.

## Claims

1. Retaining device (10) to retain in position a karabiner (50) in a loop (45) of a sling (40), the device comprising a hollow body (11) having a first opening (12a) from which a first substantially straight channel (C1) extends for the insertion of a part of the sling (40) provided with the loop (45) inside the hollow body, and a second opening (12b) and a third opening (12c) connected one to another through a second channel (C2) for the passage of the karabiner (50), wherein the second channel (C2) for the passage of the karabiner extends along a path (K) at least partially curved between said second opening (12b) and said third opening (12c), wherein the hollow body (11) comprises an abutment wall (14) arranged substantially opposing said first opening (12a), and designed to retain at least part of the loop (45) of the sling inside the hollow body, said abutment wall (14) being in an intermediate position between said second opening and said third opening (12b, 12c) along the second channel (C2) for the passage of the karabiner.

2. Device according to claim 1, **characterized in that** the hollow body (11) is asymmetrical with respect to a plane (P) passing through the axis (A) of the first substantially straight channel (C1) and perpendicular with respect to the axis (X) of the loop (45) of the sling (40) inserted in said first channel (C1).

3. Device according to claim 1 or 2, wherein the second channel (C2) extending along an at least partially curved path is designed to embrace a curved portion (51) of the karabiner (50), preferably a curved portion between a long side (52) and a short side (53) of the karabiner.

4. Device according to any one of the preceding claims, wherein said first channel (C1) and said second channel (C2) intersect at said second opening (12b) from which at least part of the loop (45) of the sling protrudes outside of the hollow body.

5. Device according to any one of the preceding claims, wherein said third opening (12c) embraces a long side (52) of the karabiner.

6. Device according to any one of the preceding claims, wherein the second opening (12b) is tilted with respect to the axis (A) of the first substantially straight channel (C1).

7. Device according to any one of the preceding claims, wherein the axis (A) of the first substantially straight channel (C1) for the insertion of the sling (40) passes through the second opening (12b).

8. Device according to any one of the preceding claims, wherein the second opening (12b) and the third opening (12c) lie on incident planes (Pb, Pc).

9. Device according to any one of the preceding claims, wherein the third opening (12b) and the first opening (12c) lie on substantially parallel planes (Pa, Pc).

10. Device according to any one of the preceding claims, wherein the third opening (12c) is designed to embrace directly a portion (52) of the karabiner and the second opening (12b) is designed to embrace indirectly a portion (53) of the karabiner, preferably by interposing the loop (45) of the sling protruding from said second opening (12b).

11. Device according to any one of the preceding claims, wherein the second opening (12b) and the third opening (12c) have area and/or shape different from one another.

12. Device according to any one of the preceding claims, wherein the third opening (12c) has an area smaller than the second opening (12b).

13. Device according to any one of the preceding claims, wherein the hollow body (11) of the device is made of elastomeric material.

14. Climbing tool (100) comprising a sling (40) connected to a karabiner (50), the sling having, in correspondence of at least one of its ends (41, 42), a loop (45) for the connection to the karabiner (50), the karabiner being provided with an elongated ring-shaped body (50a) having an inlet (54) defined by two ending portions (54a and 54b) which can be inserted in the loop (45) of the sling (40), **characterized in that** it further comprises a retaining device (10) according to any one of the preceding claims, and **in that** said retaining device is combined with an end of the sling inserted in the first channel (C1) of the hollow body (11) of the device and connected to the karabiner (50) inserted in the hollow body (11) through the second passage channel (C2) between said second opening (12b) and said third opening (12c), the karabiner (50) being inserted into the loop (45) of the sling.

15. Method for retaining in position a karabiner (50) in a loop (45) of a sling (40) by means of a device (10) according to any one of claims 1 to 13, the method comprising the step of inserting an end (41, 42) of the sling (40) comprising the loop (45) into the first channel (C1) of the body (11) of the device (10) and the step of inserting the karabiner (50) into the second channel (C2) of the body (11) of the device (10), the step of inserting the karabiner (50) into the second channel (C2) of the body (11) of the device (10) provides for the insertion of the karabiner into the loop (45) of the sling by slipping either an ending portion (54a, 54b) of the karabiner, or an end of a movable lever (58) of the karabiner (50) into the loop (45).

## Patentansprüche

1. Haltevorrichtung (10), um einen Karabiner (50) in einer Schlaufe (45) einer Schlinge (40) in Position zu halten, wobei die Vorrichtung einen Hohlkörper (11) mit einer ersten Öffnung (12a) aufweist, von der aus sich ein erster im Wesentlichen gerader Kanal (C1) erstreckt, zum Einführen eines Teils der Schlinge (40), die mit der Schlaufe (45) innerhalb des Hohlkörpers versehen ist, und einer zweiten Öffnung (12b) und einer dritten Öffnung (12c), die durch einen zweiten Kanal (C2) für den Durchgang des Karabiners (50) miteinander verbunden sind, wobei sich der zweite Kanal (C2) für den Durchgang des Karabiners entlang eines Weges (K) erstreckt, der zwischen der zweiten Öffnung (12b) und der dritten Öffnung (12c) zumindest teilweise gekrümmt ist, wobei der Hohlkörper (11) eine Widerlagerwand (14) umfasst, die im Wesentlichen gegenüber der ersten Öffnung (12a) angeordnet ist und so ausgelegt ist, dass sie mindestens einen Teil der Schlaufe (45) der Schlinge innerhalb des Hohlkörpers hält, wobei sich die Widerlagerwand (14) in einer Zwischenposition zwischen der zweiten Öffnung und der dritten Öffnung (12b, 12c) entlang des zweiten Kanals (C2) für den Durchgang des Karabiners befindet.

2. Vorrichtung gemäß Anspruch 1, **dadurch gekennzeichnet, dass** der Hohlkörper (11) bezüglich einer Ebene (P) asymmetrisch ist, die durch die Achse (A) des ersten im Wesentlichen geraden Kanals (C1) verläuft, und senkrecht zu der Achse (X) der Schlaufe (45) der Schlinge (40) ist, die in den ersten Kanal (C1) eingesetzt ist.

3. Vorrichtung gemäß Anspruch 1 oder 2, wobei der zweite Kanal (C2), der sich entlang eines zumindest teilweise gekrümmten Pfades erstreckt, so ausgelegt ist, dass er einen gekrümmten Abschnitt (51) des Karabiners (50) umfasst, vorzugsweise einen gekrümmten Abschnitt zwischen einer langen Seite (52) und einer kurzen Seite (53) des Karabiners.

4. Vorrichtung gemäß irgendeinem der vorhergehenden Ansprüche, wobei sich der erste Kanal (C1) und der zweite Kanal (C2) an der zweiten Öffnung (12b) schneiden, aus der mindestens ein Teil der Schlaufe (45) der Schlinge außerhalb des Hohlkörpers herausragt.

5. Vorrichtung gemäß irgendeinem der vorhergehenden Ansprüche, wobei die dritte Öffnung (12c) eine lange Seite (52) des Karabiners umfasst.

6. Vorrichtung gemäß irgendeinem der vorhergehenden Ansprüche, wobei die zweite Öffnung (12b) in Bezug auf die Achse (A) des ersten im Wesentlichen geraden Kanals (C1) geneigt ist.

7. Vorrichtung gemäß irgendeinem der vorhergehenden Ansprüche, wobei die Achse (A) des ersten im Wesentlichen geraden Kanals (C1) zum Einführen der Schlinge (40) durch die zweite Öffnung (12b) verläuft.

8. Vorrichtung gemäß irgendeinem der vorhergehenden Ansprüche, wobei die zweite Öffnung (12b) und die dritte Öffnung (12c) auf geneigten Ebenen (Pb, Pc) liegen.

9. Vorrichtung gemäß irgendeinem der vorhergehenden Ansprüche, wobei die dritte Öffnung (12b) und die erste Öffnung (12c) auf im Wesentlichen parallelen Ebenen (Pa, Pc) liegen.

10. Vorrichtung gemäß irgendeinem der vorhergehenden Ansprüche, wobei die dritte Öffnung (12c) so ausgelegt ist, dass sie direkt einen Teil (52) des Karabiners umfasst, und die zweite Öffnung (12b) so ausgelegt ist, dass sie indirekt einen Teil (53) des Karabiners umfasst, vorzugsweise durch Zwischenlegen der Schlaufe (45) der Schlinge, die aus der zweiten Öffnung (12b) herausragt.

11. Vorrichtung gemäß irgendeinem der vorhergehenden Ansprüche, wobei die zweite Öffnung (12b) und die dritte Öffnung (12c) eine Fläche und/oder Form aufweisen, die sich voneinander unterscheiden.

12. Vorrichtung gemäß irgendeinem der vorhergehenden Ansprüche, wobei die dritte Öffnung (12c) eine Fläche aufweist, die kleiner als die zweite Öffnung (12b) ist.

13. Vorrichtung gemäß irgendeinem der vorhergehenden Ansprüche, wobei der Hohlkörper (11) der Vorrichtung aus einem elastomeren Material besteht.

14. Kletterwerkzeug (100) umfassend eine Schlinge (40), die mit einem Karabiner (50) verbunden ist, wobei die Schlinge entsprechend mindestens einem ihrer Enden (41, 42) eine Schlaufe (45) zur Verbindung mit dem Karabiner (50) aufweist, wobei der Karabiner mit einem länglichen ringförmigen Körper (50a) versehen ist, der einen Einlass (54) aufweist, der durch zwei Endabschnitte (54a und 54b) definiert ist, die in die Schlaufe (45) der Schlinge (40) eingeführt werden können, **dadurch gekennzeichnet, dass** es weiterhin eine Haltevorrichtung (10) gemäß irgendeinem der vorhergehenden Ansprüche aufweist, und dass die Haltevorrichtung mit einem Ende der Schlinge, das in den ersten Kanal (C1) des Hohlkörpers (11) der Vorrichtung eingesetzt ist, und mit dem Karabiner (50) verbunden ist, der in den Hohlkörper (11) durch den zweiten Durchgangskanal (C2) zwischen der zweiten Öffnung (12b) und der dritten Öffnung (12c) eingeführt ist, wobei der Karabiner (50) in der Schlaufe (45) der Schlinge eingeführt ist.

15. Verfahren zum Halten eines Karabiners (50) in einer Schlaufe (45) einer Schlinge (40) in Position mittels einer Vorrichtung (10) gemäß irgendeinem der Ansprüche 1 bis 13, wobei das Verfahren den Schritt des Einführens eines Endes (41, 42) der Schlinge (40) mit der Schlaufe (45) in den ersten Kanal (C1) des Körpers (11) der Vorrichtung (10) umfasst und den Schritt des Einführens des Karabiners (50) in den zweiten Kanal (C2) des Körpers (11) der Vorrichtung (10), wobei der Schritt des Einführens des Karabiners (50) in den zweiten Kanal (C2) des Körpers (11) der Vorrichtung (10) das Einführen des Karabiners in die Schlaufe (45) der Schlinge durch Gleiten entweder eines Endabschnitts (54a, 54b) des Karabiners oder eines Endes eines beweglichen Hebels (58) des Karabiners (50) in die Schlaufe (45) vorsieht.

## Revendications

1. Dispositif de retenue (10) pour retenir en position un mousqueton (50) dans une boucle (45) d'une élingue (40), le dispositif comprenant un corps creux (11) ayant une première ouverture (12a) de laquelle un premier canal sensiblement droit (C1) s'étend pour l'insertion d'une partie de l'élingue (40) pourvue de la boucle (45) à l'intérieur du corps creux, et une deuxième ouverture (12b) et une troisième ouverture (12c) raccordées l'une à l'autre à travers un deuxième canal (C2) pour le passage du mousqueton (50), dans lequel le deuxième canal (C2) pour le passage du mousqueton s'étend le long d'une voie (K) au moins partiellement incurvée entre ladite deuxième ouverture (12b) et ladite troisième ouverture (12c), dans lequel le corps creux (11) comprend une paroi de butée (14) agencée sensiblement à l'opposé de ladite première ouverture (12a), et conçue pour retenir au moins une partie de la boucle (45) de l'élingue à l'intérieur du corps creux, ladite paroi de butée (14) étant à une position intermédiaire entre ladite deuxième ouverture et ladite troisième ouverture (12b, 12c) le long du deuxième canal (C2) pour le passage du mousqueton.

2. Dispositif selon la revendication 1, **caractérisé en ce que** le corps creux (11) est asymétrique par rapport à un plan (P) passant à travers l'axe (A) du premier canal sensiblement droit (C1) et perpendiculaire par rapport à l'axe (X) de la boucle (45) de l'élingue (40) insérée dans ledit premier canal (C1).

3. Dispositif selon la revendication 1 ou 2, dans lequel le deuxième canal (C2) s'étendant le long d'une voie au moins partiellement incurvée est conçu pour envelopper une portion incurvée (51) du mousqueton (50), de préférence une portion incurvée entre un côté long (52) et un côté court (53) du mousqueton.

4. Dispositif selon l'une quelconque des revendications précédentes, dans lequel ledit premier canal (C1) et ledit deuxième canal (C2) sont en intersection à ladite deuxième ouverture (12b) de laquelle au moins une partie de la boucle (45) de l'élingue fait saillie à l'extérieur du corps creux.

5. Dispositif selon l'une quelconque des revendications précédentes, dans lequel ladite troisième ouverture (12c) enveloppe un côté long (52) du mousqueton.

6. Dispositif selon l'une quelconque des revendications précédentes, dans lequel la deuxième ouverture (12b) est inclinée par rapport à l'axe (A) du premier canal sensiblement droit (C1).

7. Dispositif selon l'une quelconque des revendications précédentes, dans lequel l'axe (A) du premier canal sensiblement droit (C1) pour l'insertion de l'élingue (40) passe à travers la deuxième ouverture (12b).

8. Dispositif selon l'une quelconque des revendications précédentes, dans lequel la deuxième ouverture (12b) et la troisième ouverture (12c) se trouvent sur des plans incidents (Pb, Pc).

9. Dispositif selon l'une quelconque des revendications précédentes, dans lequel la troisième ouverture (12b) et la première ouverture (12c) se trouvent sur des plans sensiblement parallèles (Pa, Pc).

10. Dispositif selon l'une quelconque des revendications précédentes, dans lequel la troisième ouverture (12c) est conçue pour envelopper directement une portion (52) du mousqueton et la deuxième ouverture (12b) est conçue pour envelopper indirectement une portion (53) du mousqueton, de préférence par l'interposition de la boucle (45) de l'élingue faisant saillie depuis ladite deuxième ouverture (12b).

11. Dispositif selon l'une quelconque des revendications précédentes, dans lequel la deuxième ouverture (12b) et la troisième ouverture (12c) ont une aire et/ou une forme différentes l'une de l'autre.

12. Dispositif selon l'une quelconque des revendications précédentes, dans lequel la troisième ouverture (12c) a une aire plus petite que celle de la deuxième ouverture (12b).

13. Dispositif selon l'une quelconque des revendications précédentes, dans lequel le corps creux (11) du dispositif est constitué d'une matière élastomère.

14. Outil d'escalade (100) comprenant une élingue (40) raccordée à un mousqueton (50), l'élingue ayant, en correspondance avec au moins l'une de ses extrémités (41, 42), une boucle (45) pour le raccordement au mousqueton (50), le mousqueton étant pourvu d'un corps en forme d'anneau allongé (50a) ayant une entrée (54) définie par deux portions d'extrémité (54a et 54b) pouvant être insérées dans la boucle (45) de l'élingue (40), **caractérisé en ce qu'**il comprend en outre un dispositif de retenue (10) selon l'une quelconque des revendications précédentes, et **en ce que** ledit dispositif de retenue est combiné avec une extrémité de l'élingue insérée dans le premier canal (C1) du corps creux (11) du dispositif et raccordé au mousqueton (50) inséré dans le corps creux (11) à travers le deuxième canal de passage (C2) entre ladite deuxième ouverture (12b) et ladite troisième ouverture (12c), le mousqueton (50) étant inséré dans la boucle (45) de l'élingue.

15. Procédé de retenue en position d'un mousqueton (50) dans une boucle (45) d'une élingue (40) au moyen d'un dispositif (10) selon l'une quelconque des revendications 1 à 13,
le procédé comprenant l'étape de l'insertion d'une extrémité (41, 42) de l'élingue (40) comprenant la boucle (45) dans le premier canal (C1) du corps (11) du dispositif (10) et l'étape de l'insertion du mousqueton (50) dans le deuxième canal (C2) du corps (11) du dispositif (10), l'étape de l'insertion du mousqueton (50) dans le deuxième canal (C2) du corps (11) du dispositif (10) permet l'insertion du mousqueton dans la boucle (45) de l'élingue en faisant glisser soit une portion d'extrémité (54a, 54b) du mousqueton soit une extrémité d'un levier mobile (58) du mousqueton (50) dans la boucle (45).
